Europäisches Patentamt

European Patent Office

Office européen des brevets

(11) Publication number: **0 505 676 A1**

# EUROPEAN PATENT APPLICATION

(21) Application number: **92100842.1**

(22) Date of filing: **20.01.92**

(51) Int. Cl.5: **B27L 11/00, B23Q 3/157**

PRIORITY 260391 IT VE91000020.

(30) Priority: **26.03.91**

(43) Date of publication of application:
**30.09.92 Bulletin 92/40**

(84) Designated Contracting States:
**AT BE CH DE DK ES FR GB GR IT LI NL PT SE**

(71) Applicant: **PESSA S.p.A.**
**Via Claudia, 316**
**I-30023 Concordia Sagittaria (Venezia)(IT)**

(72) Inventor: **Pessa, Luciano**
**Via Claudia, 316**
**I-30023 Concordia Sagittaria(IT)**

(74) Representative: **Piovesana, Paolo**
**Corso del Popolo, 70**
**I-30172 Venezia-Mestre(IT)**

(54) **Device for replacing the blades in chipping machines.**

(57) Device for replacing the blades in chipping machines comprising a mandrel (2) containing in its lateral surface a plurality of parallel recesses (6), each housing a blade unit consisting of a blade (14) and blade holder (16), and further comprising a fixed presser (30) which, when the locking blocks (10) housed in the individual recesses (6) are in a predetermined position, acts on them to push them radially inwards and hence disengage the corresponding blade unit, characterised in that the recesses (6) provided in the mandrel (2) for the blade units are open at the mandrel head (32), there being provided external to said mandrel a linear activator (38) the operating direction of which is aligned with the axis of said recesses (6) when these are positioned to correspond with the fixed presser (30), and which is provided with members (48,56) for releasably engaging the facing end of said units.

FIG 1

EP 0 505 676 A1

This invention relates to a device for replacing the blades in chipping machines.

Chipping machines are known comprising a cylinder or "mandrel" with a plurality of blades applied to its lateral surface. When the mandrel is rotated and the wooden material is pressed against its lateral surface, the blades rapidly reduce it to chippings.

This type of mandrel generally comprises a plurality of recesses arranged equidistantly apart and slightly inclined to the mandrel axis. Each recess extends within the mandrel as a radial groove plus a groove inclined to the radial groove. The inclined groove houses a blade unit in the form of a blade with its holder, while the radial groove houses a block urged by springs to press outwards against the blade unit, which projects from the inclined seat and partly occupied the radial groove. A strip is provided on the bottom of the inclined groove to engage a grooved tooth of the blade holder, to which the blade is fixed. This strip, which prevents the extraction of the blade unit in a direction perpendicular to the mandrel axis, enables said unit to be moved away from the rear wall of the inclined groove when the block has been shifted from its retaining position, to enable said unit to be extracted from its grooved seat.

This known system for retaining the blade units allows rapid replacement of the blades, which wear rapidly and have to be frequently sharpened. This replacement is achieved in practice by firstly pushing the block into its seat with an appropriate tool with which each chipping machine is provided. The blade unit is then moved forward from the rear wall of its seat, and is finally extracted radially from it to be replaced with a different previously prepared blade unit, and so on for all the blades of the mandrel.

Although from a theoretical viewpoint this procedure does not present any difficulty, it proves very laborious in practice because of the number of replacements required for the entire mandrel.

As a mandrel can have as many as 50-60 blades, which require about one hour for their total replacement, and the replacement may need to be provided as frequently as every three hours, depending on the quality of the wood to be chipped, it is apparent that the down-time is considerable in relation to the operating periods of a chipping machine.

This replacement has to be carried out manually, requiring the presence of specialized personnel for all the time involved in replacing the entire set of blades.

In addition the inevitably dusty state of the working environment results in wood dust and general dirt being deposited in the blade unit recesses, so hindering effective locking of said units by the blocks. There is therefore a certain risk of these units escaping during machine operation, especially if the blades are subjected to abnormal stresses by particularly hard wood or by foreign bodies present in it.

An object of invention is to effect the replacement of the entire set of blade units far more quickly than is currently possible.

A further object of the invention is to effect the replacement in a manner which can be automated, hence dispensing completely with the need for specialized personnel.

A further object of the invention is to effect this replacement in a manner which ensures that each blade unit is securely retained in its respective recess, with no possibility of accidental escape during machine operation.

These and further objects which will be apparent from the description given hereinafter are attained according to be invention by a device for replacing the blades in chipping machines as desribed in claim 1.

A preferred embodiment of the present invention is described hereinafter with reference to the accompanying drawings, in which:

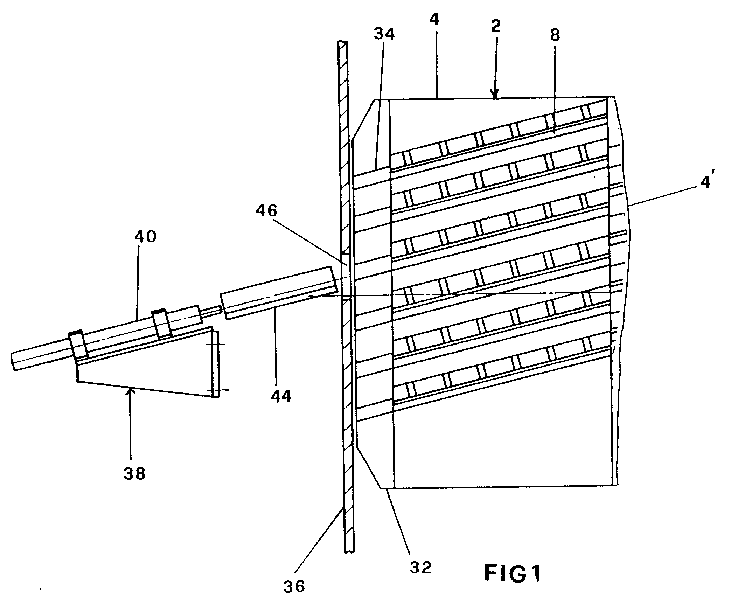

Figure 1      is a schematic plan view of a chipping machine mandrel provided with the blade replacement device of the invention;

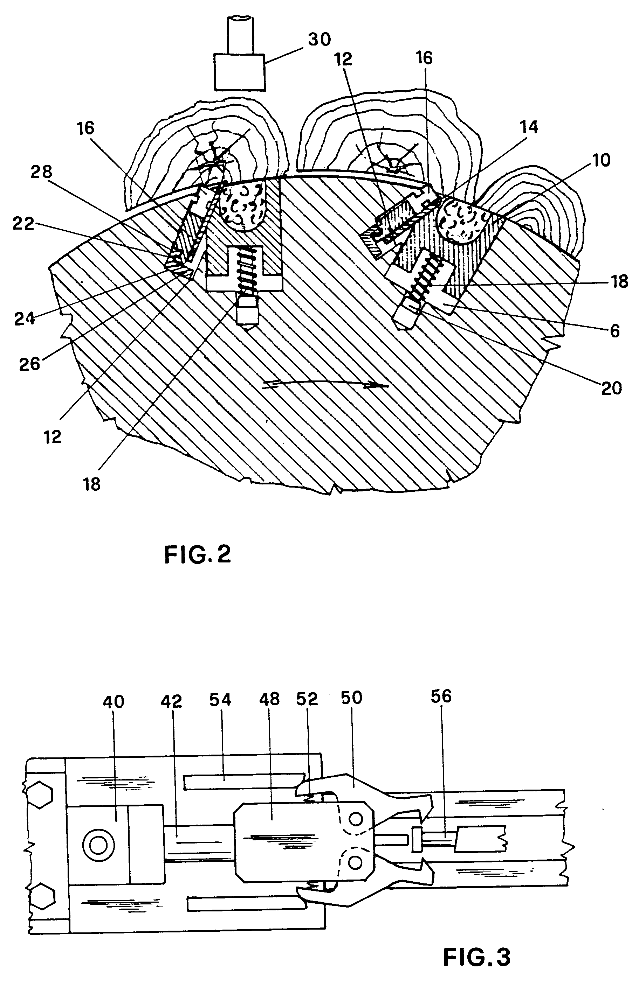

Figure 2      is a view thereof on the line II-II of figure 1; and

Figure 3      is an enlarged view thereof on the line III-III of Figure 1.

As can be seen from the figures, the device of the invention is applied to a conventional chipping machine mandrel 2 comprising two parts 4,4'. The mandrel is shown only partly, for ease of representation, however the description relating to the part 4 is equally valid for the other part 4'.

The part 4 of the mandrel comprises a plurality of equidistant recesses 6 inclined to the axis of rotation and extending within the mandrel part to form a substantially radial groove 8 for housing a locking block 10 and an inclined groove 12 for housing the blade unit formed from the blade 14 and its holder 16, these being connected together. A plurality of springs 18 radially push the block 10 outwards guided by pins 20, so that is locks the blade unit against the rear wall of the groove 12, the unit already being secured to the groove by the engagement between a grooved tooth 22 of the blade unit 16 and a corresponding grooved counter-tooth 24 provided in a strip fixed to the base of the groove 12.

On the strip 26 there is provided a rib 28 the purpose of which is to prevent the grooved tooth 22 on the blade holder 16 from withdrawing from the grooved counter-tooth 24 on the strip.

In a predetermined fixed position, the chipping machine is provided with a conventional presser 30 acting in the sense of pressing the facing block 10 radially inwards against the elastic force of the springs 18.

The part 4 of the mandrel 2 is provided with a head 32 which delimits the recesses 6 on the outside, this head comprising a plurality of apertures 34 which extend the inclined grooves 12 to the outside.

In a position corresponding with that occupied by the recesses 6 when their block 10 faces the presser 30 there is provided, external to the head 32 and also to a protection guard 36 for the mandrel 2, a linear activator indicated overall by 38. It comprises a hydraulic or pneumatic cylinder 40 within which there slides a piston, the rod 42 of which emerges on the side facing the mandrel 2. Between the cylinder 40 and the guard 36 there is positioned a guide 44 which, as in the case of the cylinder 40 and rod 42 of the relative piston, is aligned with that inclined groove 12 which at that moment is visible through an aperture 46 provided in the guard 36.

The end of the rod 42 is provided with a head 48 for engaging the blade unit. To this head there are hinged a pair of gripper jaws 50 essentially of lever shape, with the front arm provided externally with an inclined surface and the rear arm associated with a spring 52 which maintains this arm in the operating state.

In a position corresponding with the rear end-of-travel position of said engagement head, the cylinder 40 is provided rigidly with two guides 54 which oppose the gripper jaws 50 to cause them to open.

The gripper jaws 50 act as described hereinafter on mushroom-shaped appendices 56 provided at the end of the various blade holders 16.

The operation of the device according to the invention is as follows:
while the chipping machine operates, this device is inactive.

When however the blades are to be replaced, the mandrel is halted in a position such that the locking block 10 of a recess 6 faces the presser 30. Here, an automatic command fed to the cylinder 38 causes the piston to advance until the engagement head provided at the end of its rod 42 has cauised the two gripper jaws 50 to slide so that their inclined surface contacts the head of the mushroom appendix 56 and they engage it. A subsequent automatic command operates the presser 30, which pushes the block 10 radially inwards to release the blade unit so that a reverse automatic command fed to the cylinder 40 is able to cause it to extract the blade unit from recess 12 and, after dragging it through the aperture 34 in the head 32 and the aperture 46 in the guard, drag it along the guide 44. This extraction travel terminates when the two gripper jaws 50 of the head 48 interfere with the guides 54 to cause them to diverge and disengage from the mushroom appendix 56.

At this point the blade unit can be withdrawn from the guide 44 and be replaced with a further separately prepared unit which, following a new command to the cylinder 40, is forcibly inserted into the groove 12.

On termination of this insertion, during which the presser has remained constantly active, it is deactivated so that the block 10 in returning to its operating position locks the blade unit in the groove 12. At this point a reverse command fed to the cylinder 40 withdraws the rod 42 and the engagement head 48 rigid with it, this withdrawal causing the two gripper jaws 50, because of a slight inclination in their inner walls, to disengage from the mushroom appendix 56 rigid with the locked blade holder 16. When the piston of the cylinder 40 has terminated its travel the mandrel 2 is advanced through one step to repeat the replacement cycle on the blade unit of the adjacent recess.

It is also possible to automatically remove from the guide 44 that blade unit which has just been extracted from the mandrel, and to automatically feed the guide with new units so that the replacement of all blade units of the part 4 can proceed automatically, without personnel intervention.

The procedure just described in relation to the part 4 can also take place simultaneously in relation to the part 4', so that the total time required for replacing the blade units of the two parts is not substantially changed.

From the aforegoing it is apparent that the device of the invention is particularly advantageous, in that:

- it enables the blade units to be replaced much more rapidly, reducing the time required to less than 50% of that previously required for the same operation;
- it enables the replacement operation to be completely automated, obtaining the double advantage of a virtually total elimination of specialized personnel and an even more considerable reduction in the time required for the operation;
- the strip 26 prevents any disengagement of the grooved tooth from the grooved counter-tooth 24, hence preventing any danger of escape of the blade unit even in the case of imperfect locking by the block 10.

**Claims**

1. A device for replacing the blades in chipping machines comprising a mandrel (2) containing in its lateral surface a plurality of parallel recesses (6), each housing a blade unit consisting of a blade (14) and blade holder (16), and further comprising a fixed presser (30) which, when the locking blocks (10) housed in the individual recesses (6) are in a predeterminated position, acts on them to push them radially inwards and hence disengage the corresponding blade unit, characterised in that the recesses (6) provided in the mandrel (2) for the blade units are open at the mandrel head (32), there being provided external to said mandrel a linear activator (38) the operating direction of which is aligned with the axis of said recesses (6) when these are positioned to correspond with the fixed presser (30), and which is provided with members (48,56) for releasably engaging the facing end of said units.

2. A device as claimed in claim 1, for mandrels in which each recess (6) comprises a radial groove (8) for a locking block (10) for the blade unit (14,16) and an inclined groove (12) for said unit, characterised by comprising on the base of said inclined groove (12) a strip (26) provided with a rib (28) against which the blade holder (16) rests when its grooved tooth (22) is engaged in a grooved counter-tooth (24) provided on the strip, to prevent their mutual disengagement.

3. A device as claimed in claim 1, characterised in that a guide (44) is interposed between the linear activator (38) and the facing recess (6) of the mandrel (22) and is aligned with both, to guide the blade unit (14,16) during its insertion into the recess (6) and its withdrawal from it.

4. A device as claimed in claim 1, characterised in that the linear activator (38) is provided with an engagement head (48) cooperating with a gripper member (56) provided on the blade holder (16) of each blade unit.

5. A device as claimed in claim 4, characterised in that each blade holder (16) is provided with a mushroom-shaped appendix (56), the engagement head (48) of the linear activator (38) comprising a pair of jaws (50) which can be automatically commanded to open and close.

6. A device as claimed in claim 5, characterised in that the jaws (50) essentially consist of rocker arms with that arm facing the mandrel (2) shaped to engage the mushroom appendix (56) and the other arm associated with a spring (52) acting in the sense of elastically maintaining the jaws in their engagement state.

7. A device as claimed in claim 6, characterised in that the linear activator (38) is provided, in correspondence with that end-of-travel position distant from the mandrel (2), with fixed members (54) acting against the gripper jaws (50) in order to disengage them from the mushroom appendix (56).

8. A device as claimed in claim 1 for mandrels comprising two separate parts (4,4'), characterised by being positioned to the side of each part.

9. A device as claimed in claim 3, characterised in that with the guide (44) there are associated members for automatically feeding the blade units (14,16) to be inserted, and for automatically removing the blade units extracted from the mandrel (2).

FIG1

**FIG. 2**

**FIG. 3**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 109 691 (CHARMES) <br> * page 14 - page 15; figures 5-7 * | 1,3-9 | B27L11/00 <br> B23Q3/157 |
| Y | | 2 | |
| Y | FR-A-2 332 108 (PESSA) <br> * figure 1 * | 2 | |
| X | US-A-3 017 912 (SYBERTZ) <br> * column 1, line 62 - line 66 * <br> * column 2, line 22 - line 30 * <br> * column 2, line 50 - line 72 * <br> * column 3, line 8 - line 14; figures 1,3 * | 1 | |
| A | DE-A-2 608 056 (HOMBAK) | | |
| A | US-A-2 470 262 (PAYZER) | | |
| A | DE-C-3 827 592 (PUTSCH) | | |

TECHNICAL FIELDS
SEARCHED (Int. Cl.5 )

B23D
B27L
B23Q
B27C
B02C

The present search report has been drawn up for all claims

| Place of search | Date of completion of the search | Examiner |
|---|---|---|
| THE HAGUE | 09 JULY 1992 | HUGGINS J.D. |